# FASCICULE DE BREVET EUROPEEN

(11) **EP 1 704 366 B1**
(45) Date de publication et mention de la délivrance du brevet: **02.09.2015**
(21) Numéro de dépôt: 04805878.8
(22) Date de dépôt: 03.12.2004
(51) Int. Cl.: C03B 5/235, C03B 29/00, F23D 14/22, F23D 14/32

(54) **PROCEDE DE COMBUSTION ETAGEE METTANT EN OEUVRE UN GAZ PAUVRE EN OXYGENE**
VERFAHREN ZUR ABGESTUFTEN VERBRENNUNG UNTER VERWENDUNG EINES SAUERSTOFFARMEN GASES
STAGED COMBUSTION METHOD USING A LOW-OXYGEN GAS

(30) Priorité: 16.12.2003 FR 0351064
(43) Date de publication de la demande: 27.09.2006
(73) Titulaire: L'AIR LIQUIDE, Société Anonyme pour l'Etude et l'Exploitation des Procédés Georges Claude, 75007 Paris (FR)
(72) Inventeur: AMIRAT, Mohand, F-93400 Saint-Ouen (FR); DUPERRAY, Pascal, F-78180 Montigny (FR); GRAND, Benoît, F-78000 Versailles (FR); LEROUX, Bertrand, F-92130 Issy-Les-Moulineaux (FR); RECOURT, Patrick Jean-Marie, F-91460 Marcoussis (FR); SYLVESTRE, Loic, F-35160 Monterfil (FR); TSIAVA, Rémi Pierre, F-91250 St-Germain-Les-Corbeil (FR)
(74) Mandataire: De Vleeschauwer, Natalie Y.L.D.
(86) Numéro de dépôt international: PCT/FR2004/050647
(87) Numéro de publication internationale: WO 2005/059438

(56) Documents cités:
- WO-A-02/27236
- WO-A-2004/094902
- FR-A- 2 823 290
- FR-A- 2 830 606

## Description

La présente invention concerne un procédé de combustion étagée mettant en oeuvre un gaz oxygéné riche en oxygène et un gaz oxygéné pauvre en oxygène utilisable lors des phases de rupture d'approvisionnement en oxygène produit par une unité de production d'oxygène. WO 2004/094902 et FR-2823290 divulguent des procédés de combustion étagée mettant en oeuvre un ou plusieurs gaz oxygénés.

Les procédés de combustion mettant en oeuvre des gaz oxygénés utilisent généralement de l'oxygène provenant d'unités de production continue d'oxygène telles qu'une unité cryogénique ou une unité d'adsorption modulée sous vide (VSA "Vacuum Swing Adsorption" en anglais). Pour anticiper les risques de rupture de l'alimentation en oxygène provenant de ces unités, il est généralement prévu un réservoir d'oxygène liquide à proximité du lieu de mise en oeuvre de la combustion. Pour réduire les coûts de stockage de ce réservoir et éviter un stockage trop important d'oxygène qui pourrait classer le lieu de combustion comme un site à risque d'accident élevé, on préfère généralement réduire la capacité de ce stockage. Toutefois cette réduction de la capacité de stockage ne permet pas toujours d'alimenter la combustion suffisamment longtemps pendant la rupture d'approvisionnement. Une solution serait de pouvoir alimenter la combustion avec de l'air, mais généralement, les brûleurs mettant en oeuvre un gaz plus riche en oxygène que l'air n'autorisent pas l'utilisation d'un débit d'air important.

Le but de la présente invention est donc de proposer un procédé de combustion et un brûleur associé fonctionnant habituellement avec un gaz plus riche en oxygène que l'air permettant un fonctionnement en air en cas de rupture de l'approvisionnement continu en oxygène.

Dans ce but, l'invention concerne un procédé de combustion d'un combustible à l'aide d'un gaz oxygéné, dans lequel on injecte un jet du combustible et au moins deux jets de gaz oxygéné riche en oxygène, le premier jet de gaz oxygéné riche en oxygène, dit primaire, étant injecté au contact du jet de combustible et de manière à engendrer une première combustion incomplète, les gaz issus de cette première combustion comportant encore au moins une partie du combustible, et le deuxième jet de gaz oxygéné riche en oxygène étant injecté à une distance l₁ du jet de combustible de manière à entrer en combustion avec une première partie du combustible présent dans les gaz issus de la première combustion, procédé dans lequel on injecte un gaz oxygéné pauvre en oxygène à une distance l₂ du jet de combustible de manière à entrer en combustion avec une deuxième partie du combustible présent dans les gaz issus de la première combustion et en ce que l₂ est supérieure à l₁, dans lequel également le gaz oxygéné riche en oxygène présente une concentration en oxygène supérieure à 30 % en volume et le gaz oxygéné pauvre en oxygène présente une concentration en oxygène d'au plus 30 % en volume, et dans lequel la surface de la section de l'orifice d'injection du gaz oxygéné pauvre en oxygène est comprise entre 4 et 100 fois la surface d'une section d'injection du gaz oxygéné riche en oxygène qui se trouve également à la distance l₂ du jet de combustible.

L'invention concerne également un ensemble brûleur à injection séparée constitué d'au moins deux blocs et comportant un orifice pour l'injection de gaz combustible et au moins quatre orifices pour l'injection de gaz oxygéné, dans lequel :
- le premier bloc comporte un orifice pour l'injection de combustible et au moins deux orifices pour l'injection de gaz oxygéné, le premier orifice d'injection de gaz oxygéné étant disposé au contact de l'orifice d'injection de combustible, le deuxième orifice d'injection de gaz oxygéné étant disposé à une distance l₁ de l'orifice pour l'injection de combustible,
- le deuxième bloc comporte au moins un troisième et un quatrième orifices pour l'injection de gaz oxygéné chacun disposés à une distance l₂ de l'orifice pour l'injection de combustible du premier bloc, l₂ étant supérieure à l₁, le quatrième orifice pour l'injection de gaz oxygéné présentant une surface comprise entre 4 et 100 fois la surface du troisième orifice.

Enfin, l'invention concerne l'utilisation du procédé précédent lors de la rupture de la production continue d'oxygène.

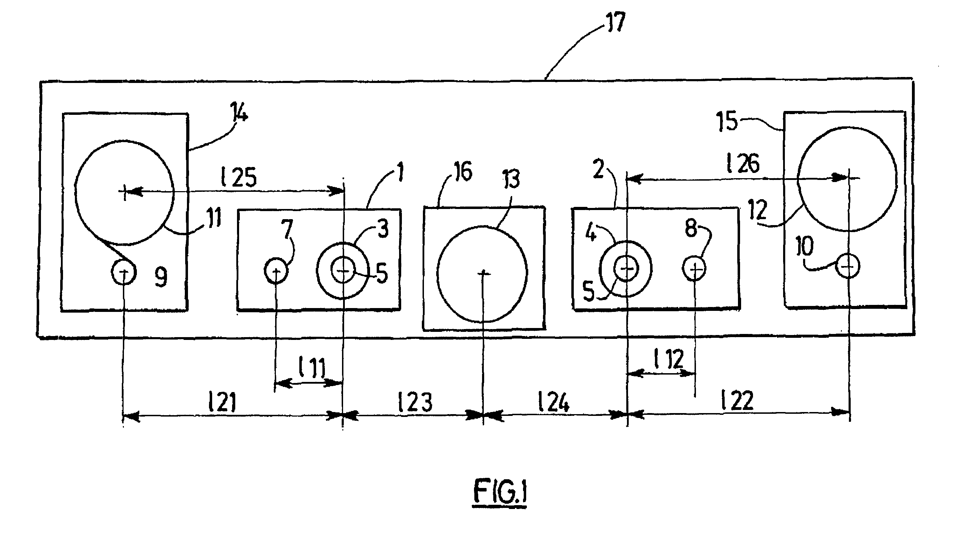

D'autres caractéristiques et avantages de l'invention apparaîtront à la lecture de la description qui va suivre. A titre d'exemple non limitatif, l'invention est illustrée par la figure 1 qui est une vue schématique d'un ensemble brûleur selon l'invention.

L'invention concerne donc tout d'abord un procédé de combustion d'un combustible à l'aide d'un gaz oxygéné, dans lequel on injecte un jet du combustible et au moins deux jets de gaz oxygéné riche en oxygène, le premier jet de gaz oxygéné riche en oxygène, dit primaire, étant injecté au contact du jet de combustible et de manière à engendrer une première combustion incomplète, les gaz issus de cette première combustion comportant encore au moins une partie du combustible, et le deuxième jet de gaz oxygéné riche en oxygène étant injecté à une distance l₁ du jet de combustible de manière à entrer en combustion avec une première partie du combustible présent dans les gaz issus de la première combustion, procédé dans lequel on injecte un gaz oxygéné pauvre en oxygène à une distance l₂ du jet de combustible de manière à entrer en combustion avec une deuxième partie du combustible présent dans les gaz issus de la première combustion et en ce que l₂ est supérieure à l₁. L'invention consiste donc en un procédé de combustion étagée dans lequel le gaz oxygéné nécessaire à la combustion du combustible est divisé sous forme d'au moins trois jets. Un procédé de combustion étagée consiste à diviser la quantité de gaz oxygéné nécessaire à la combustion totale du combustible en au moins deux flux complémentaires de gaz oxygéné introduits à différentes distances du flux de combustible. Ainsi, un premier flux de gaz oxygéné complémentaire est introduit à très proche distance du flux de combustible. Ce flux le plus proche du flux de combustible est dénommé le flux primaire ; il permet la combustion partielle du combustible à une température contrôlée qui limite la formation des NOₓ. Au moins un autre flux de gaz oxygéné complémentaire est introduit à plus grande distance du combustible que le flux de gaz oxygéné primaire ; il permet d'achever la combustion du combustible n'ayant pas réagi avec le gaz oxygéné primaire. Ce flux est dénommé secondaire. Selon la présente invention, le premier jet, dit primaire, est injecté au contact du jet de combustible, ce qui signifie que la distance entre le jet de combustible et le jet d'oxydant primaire est nulle (mis à part la présence éventuelle d'une paroi de canalisation séparant ces deux jets). Ce jet primaire est un jet de gaz oxygéné riche en oxygène. Selon l'invention, un gaz oxygéné riche en oxygène présente une concentration en oxygène supérieure à 30 % en volume, de préférence d'au moins 90 % en volume. Généralement, le gaz oxygéné riche en oxygène provient en partie d'une unité de stockage d'oxygène liquide. L'oxygène liquide peut être dilué avec de l'air de manière à ce que le gaz oxygéné injecté présente une concentration en oxygène supérieure à 30 % en volume, de préférence d'au moins 90 % en volume. Les deuxième et troisième jets d'oxydant sont injectés à distance du jet de combustible et du jet primaire ; ils permettent d'apporter la quantité d'oxydant nécessaire à l'achèvement de la combustion du combustible initiée par le jet primaire. Selon l'invention, le gaz oxygéné du deuxième jet est riche en oxygène et ce deuxième jet est injecté à une distance l₁. De préférence, la distance l₁ est comprisse entre 5 et 20 cm. Toujours selon l'invention, le troisième jet est pauvre en oxygène et est injecté à une distance l₂ supérieure à l₁ et concerne un gaz oxygéné pauvre en oxygène. Par "pauvre en oxygène", on entend un gaz oxygéné présentant une concentration en oxygène d'au plus 30 % en volume. De préférence, il s'agit d'air. La distance l₂ est avantageusement supérieure à 30 cm.

Généralement, la somme des quantités d'oxygène injecté par tous les jets de gaz oxygénés est sensiblement stoechiométrique, c'est-à-dire comprise dans un intervalle de plus ou moins 15 % par rapport à la quantité stoechiométrique nécessaire à la combustion totale du combustible injecté. De préférence, la quantité d'oxygène injecté par les jets de gaz oxygéné riche en oxygène représente 10 à 50 %, encore plus préférentiellement 25 à 50 % de la quantité totale d'oxygène injecté.

Selon un mode particulier, le gaz oxygéné pauvre en oxygène peut être préchauffé avant d'être injecté.

L'invention concerne également un ensemble brûleur à injection séparée constitué d'au moins deux blocs et comportant un orifice pour l'injection de gaz combustible et au moins quatre orifices pour l'injection de gaz oxygéné, dans lequel :
- le premier bloc comporte un orifice pour l'injection de combustible et au moins deux orifices pour l'injection de gaz oxygéné, le premier orifice d'injection de gaz oxygéné étant disposé au contact de l'orifice d'injection de combustible, le deuxième orifice d'injection de gaz oxygéné étant disposé à une distance l₁ de l'orifice pour l'injection de combustible,
- le deuxième bloc comporte au moins un troisième et un quatrième orifices pour l'injection de gaz oxygéné chacun disposés à une distance l₂ de l'orifice pour l'injection de combustible du premier bloc, l₂ étant supérieure à l₁, le quatrième orifice pour l'injection de gaz oxygéné présentant une surface comprise entre 4 et 100 fois la surface du troisième orifice. Par bloc, on entend un bloc réfractaire inséré dans la paroi du four. Par orifice, on entend un tube assurant la délivrance d'un jet de gaz. Lors de la mise en oeuvre d'un procédé de combustion étagée avec cet ensemble brûleur et une source d'oxygène non limitée en volume, le premier orifice permet l'injection du jet de gaz oxygéné primaire riche en oxygène, les deuxième et troisième orifices permettent l'injection de gaz oxygénés riches en oxygène et aucun gaz n'est injecté dans le quatrième orifice. Ce procédé correspond à un procédé de combustion étagée mettant en oeuvre un gaz oxygéné riche en oxygène avec un jet primaire et deux jets secondaires. Lors d'une rupture de la production continue en oxygène, cet ensemble brûleur permet la mise en oeuvre du procédé selon l'invention précédemment décrit : le premier et le deuxième orifices permettent l'injection de jets de gaz oxygéné riche en oxygène, aucun gaz n'est injecté dans le troisième orifice et un gaz oxygéné pauvre en oxygène est injecté dans le quatrième orifice.

De préférence, l'ensemble brûleur est conçu de manière à ce que la distance l₁ soit comprise entre 5 et 20 cm. En outre, les distances l₂ sont avantageusement supérieures à 30 cm. Le premier orifice d'injection de gaz oxygéné est avantageusement disposé centralement dans l'orifice d'injection de combustible.

Selon un mode particulier, l'ensemble brûleur peut comprendre un troisième bloc comportant un cinquième orifice pour l'injection de gaz oxygéné disposé à une distance l₂ de l'orifice d'injection du combustible et présentant une surface comprise entre 4 et 100 fois la surface du troisième orifice d'injection. Selon ce mode, l'ensemble comprend donc deux orifices de grande surface chacun à une distance l₂ de l'injection de combustible. Selon ce dernier mode, l'ensemble peut avantageusement comprendre deux premiers blocs, deux deuxièmes blocs et un troisième bloc. Dans ce dernier cas, les distances l₁ et l₂ respectives à chaque orifice dans la première paire de premier et deuxième blocs sont de préférence les mêmes que les distances l₁ et l₂ respectives à chaque orifice de type identique dans la deuxième paire de premier et deuxième blocs. Il en est de même pour les surfaces des orifices de la première paire de premier et deuxième blocs et les surfaces des orifices de même type de la deuxième paire de premier et deuxième blocs. Ainsi, par exemple, les deuxième et troisième orifices d'injection de gaz oxygéné des deux deuxième blocs présentent les mêmes valeurs de distance I₁ et I₂ et de surface. Selon une mise en oeuvre préférée de ce mode, le cinquième orifice commun présente une surface supérieure à celle des quatrièmes orifices.

Enfin, l'invention concerne l'utilisation du procédé précédemment décrit pour le chauffage d'une charge de verre ou pour un four de réchauffage.

L'invention concerne l'utilisation du procédé précédemment décrit lors de la rupture de la production continue d'oxygène.

La figure 1 illustre la mise en oeuvre du procédé selon l'invention à l'aide d'ensemble brûleur comprenant cinq blocs.

Les blocs 1, 2, 14, 15, 16 sont intégrés dans la paroi du four 17 et représentés de face. Les blocs 1 et 2 comprennent chacun :
- un orifice 3, 4 pour l'injection du combustible,
- un premier orifice 5, 6 pour l'injection d'un gaz oxygéné riche en oxygène disposé centralement au centre de l'orifice respectivement 3 et 4,
- un deuxième orifice 7, 8 pour l'injection d'un gaz oxygéné riche en oxygène situé respectivement à une distance l₁₁ de l'orifice 3 et à une distance l₁₂ de l'orifice 4, avec l₁₁ = l₁₂,

Les blocs 14 et 15 comprennent chacun :
- un troisième orifice 9, 10 pour l'injection d'un gaz oxygéné riche en oxygène situé respectivement à une distance l₂₁ de l'orifice 3 et à une distance l₂₂ de l'orifice 4, avec l₂₁ = l₂₂,
- un quatrième orifice 11, 12 pour l'injection d'un gaz oxygéné pauvre en oxygène situé respectivement à une distance l₂₅ de l'orifice 3 et à une distance I₂₆ de l'orifice 4, avec l₂₅ = l₂₆. La surface du quatrième orifice 11, 12 est comprise entre 4 et 100 fois la surface du troisième orifice 9, 10 correspondant.

Le bloc 16 est placé entre les blocs 1 et 2 et comprend un cinquième orifice 13 pour l'injection d'un gaz oxygéné pauvre en oxygène situé respectivement à une distance I₂₃ de l'orifice 3 et à une distance l₂₄ de l'orifice 4, avec l₂₃ = l₂₄. La surface du cinquième orifice 13 est comprise entre 4 et 100 fois la surface du troisième orifice 9 ou 10.

Lors de la mise en oeuvre d'un procédé de combustion étagée avec cet ensemble brûleur et une source d'oxygène, le combustible est injecté par les orifices 5 et 6 et le gaz oxygéné riche en oxygène par les orifices 5, 6, 7, 8, 9 et 10. Aucun gaz n'est injecté par les orifices 11, 12 et 13. Ce procédé correspond à un procédé de combustion étagée mettant en oeuvre un gaz oxygéné riche en oxygène avec un jet primaire et deux jets secondaires. Lors d'une rupture en production d'oxygène et l'utilisation d'oxygène en quantité limitée, cet ensemble brûleur permet la mise en oeuvre du procédé selon l'invention précédemment décrit : le combustible est toujours injecté par les orifices 3 et 4 et le gaz oxygéné riche en oxygène est toujours injecté par les orifices 5, 6, 7 et 8. Par contre, aucun gaz oxygéné n'est injecté par les orifices 9 et 10 et un gaz oxygéné pauvre en oxygène est injecté par les orifices 11, 12 et 13.

Par mise en oeuvre du procédé tel que précédemment décrit, il est possible d'approvisionner avec de l'air un brûleur fonctionnant habituellement avec un gaz plus riche en oxygène que l'air en cas de rupture de l'approvisionnement continu en oxygène.

En outre, en cas de rupture d'approvisionnement en oxygène et d'épuisement de l'oxygène stocké, il est possible d'utiliser le brûleur selon l'invention avec uniquement de l'air à la place de tous les gaz oxygénés. Le procédé de combustion reste performant.

## Revendications

1. Procédé de combustion d'un combustible à l'aide d'un gaz oxygéné, dans lequel on injecte un jet du combustible et au moins deux jets de gaz oxygéné riche en oxygène, le premier jet de gaz oxygéné riche en oxygène, dit primaire, étant injecté au contact du jet de combustible et de manière à engendrer une première combustion incomplète, les gaz issus de cette première combustion comportant encore au moins une partie du combustible, et le deuxième jet de gaz oxygéné riche en oxygène étant injecté à une distance l₁ du jet de combustible de manière à entrer en combustion avec une première partie du combustible présent dans les gaz issus de la première combustion, et dans lequel on injecte un gaz oxygéné pauvre en oxygène à une distance l₂ du jet de combustible de manière à entrer en combustion avec une deuxième partie du combustible présent dans les gaz issus de la première combustion et en ce que l₂ est supérieure à l₁, et dans lequel le gaz oxygéné riche en oxygène présente une concentration en oxygène supérieure à 30 % en volume, **caractérisé en ce que** le gaz oxygéné pauvre en oxygène présente une concentration en oxygène d'au plus 30 % en volume, et **en ce que** la surface de la section de l'orifice d'injection du gaz oxygéné pauvre en oxygène est comprise entre 4 et 100 fois la surface d'une section d'injection du gaz oxygéné riche en oxygène qui se trouve également à la distance l₂ du jet de combustible.

2. Procédé selon la revendication 1, **caractérisé en ce que** la distance l₁ est comprise entre 5 et 20 cm.

3. Procédé selon l'une des revendications précédentes, **caractérisé en ce que** la distance l₂ est supérieure à 30 cm.

4. Procédé selon l'une des revendications précédentes, **caractérisé en ce que** la quantité d'oxygène injecté par les jets de gaz oxygéné riche en oxygène représente 10 à 50 % de la quantité totale d'oxygène injecté.

5. Procédé selon l'une des revendications précédentes, **caractérisé en ce que** le gaz oxygéné pauvre en oxygène est préchauffé avant d'être injecté.

6. Procédé selon l'une des revendications précédentes, **caractérisé en ce que** le gaz oxygéné riche en oxygène provient au moins en partie d'une unité de stockage d'oxygène liquide.

7. Ensemble brûleur à injection séparée constitué d'au moins deux blocs (1, 2, 14, 15, 16) et comportant un orifice pour l'injection de gaz combustible (3, 4) et au moins quatre orifices pour l'injection de gaz oxygéné (5, 6, 7, 8, 9, 10, 11, 12, 13), dans lequel :
- le premier bloc (1, 2) comporte un orifice pour l'injection de combustible (3, 4) et au moins deux orifices pour l'injection de gaz oxygéné (5, 6, 7, 8), le premier orifice d'injection de gaz oxygéné (5, 6) étant disposé au contact de l'orifice d'injection de combustible (3, 4), le deuxième orifice d'injection de gaz oxygéné (7, 8) étant disposé à une distance l₁ de l'orifice pour l'injection de combustible (3, 4),
- le deuxième bloc (14, 15) comporte au moins un troisième et un quatrième orifices pour l'injection de gaz oxygéné (9, 10, 11, 12) chacun disposés à une distance l₂ de l'orifice pour l'injection de combustible (3, 4) du premier bloc, l₂ étant supérieure à l₁, le quatrième orifice (11, 12) pour l'injection de gaz oxygéné présentant une surface comprise entre 4 et 100 fois la surface du troisième orifice (9, 10).

8. Ensemble brûleur selon la revendication précédente, **caractérisé en ce que** le premier orifice (5, 6) d'injection de gaz oxygéné est disposé centralement dans l'orifice d'injection de combustible (3, 4).

9. Ensemble brûleur selon la revendication 7 ou 8, **caractérisé en ce qu'**il comprend un troisième bloc (16) comportant un cinquième orifice (13) pour l'injection de gaz oxygéné disposé à une distance l₂ de l'orifice d'injection (3, 4) du combustible et présentant une surface comprise entre 4 et 100 fois la surface du troisième orifice (9, 10) d'injection.

10. Ensemble brûleur selon la revendication précédente, **caractérisé en ce qu'**il comprend deux premiers blocs (1, 2), deux deuxièmes blocs (14, 15) et un troisième bloc (16).

11. Utilisation du procédé défini selon l'une des revendications 1 à 6 pour le chauffage d'une charge de verre ou pour un four de réchauffage.

12. Utilisation du procédé défini selon l'une des revendications 1 à 6 lors de la rupture de la production continue d'oxygène.

13. Utilisation du procédé selon l'une quelconque des revendications 1 à 6 lors d'une rupture de l'approvisionnement continu d'oxygène.

## Patentansprüche

1. Verfahren zum Verbrennen eines Brennstoffs mit Hilfe eines sauerstoffhaltigen Gases, bei dem ein Brennstoffstrahl und wenigstens zwei Strahlen sauerstoffhaltigen, an Sauerstoff reichen Gases eingespritzt werden, wobei der erste Strahl sauerstoffhaltigen, an Sauerstoff reichen Gases, der so genannte Primärstrahl, in Kontakt mit dem Brennstoffstrahl und so eingespritzt wird, dass eine erste unvollständige Verbrennung bewirkt wird, wobei die Gase aus dieser ersten Verbrennung noch wenigstens einen Teil des Brennstoffs aufweisen, und der zweite Strahl sauerstoffhaltigen, an Sauerstoff reichen Gases in einem Abstand l₁ zum Brennstoffstrahl eingespritzt wird, um mit einem ersten Teil des Brennstoffs, der in den Gasen aus der ersten Verbrennung enthalten ist, verbrannt zu werden, und bei dem ein sauerstoffhaltiges, an Sauerstoff armes Gas in einem Abstand l₂ zum Brennstoffstrahl eingespritzt wird, um mit einem zweiten Teil des Brennstoffs, der in den Gasen aus der ersten Verbrennung enthalten ist, verbrannt zu werden, und bei dem l₂ größer ist als l₁ und bei dem das sauerstoffhaltige, an Sauerstoff reiche Gas eine Sauerstoffkonzentration aufweist, die größer als 30 Volumen-% ist, **dadurch gekennzeichnet, dass** das sauerstoffhaltige, an Sauerstoff arme Gas eine Sauerstoffkonzentration von höchstens 30 Volumen-% aufweist und dass die Fläche des Querschnitts der Öffnung zum Einspritzen des sauerstoffhaltigen, an Sauerstoff armen Gases zwischen dem 4- und 100-Fachen der Fläche eines Querschnitts zum Einspritzen des sauerstoffhaltigen, an Sauerstoff reichen Gases beträgt, das sich auch in einem Abstand l₂ zum Brennstoffstrahl befindet.

2. Verfahren nach Anspruch 1, **dadurch gekennzeichnet, dass** der Abstand l₁ zwischen 5 und 20 cm beträgt.

3. Verfahren nach einem der vorhergehenden Ansprüche, **dadurch gekennzeichnet, dass** der Abstand l₂ größer als 30 cm ist.

4. Verfahren nach einem der vorhergehenden Ansprüche, **dadurch gekennzeichnet, dass** die Menge des Sauerstoffs, der durch die Strahlen sauerstoffhaltigen, an Sauerstoff reichen Gases eingespritzt wird, 10 bis 50 % der Gesamtmenge des eingespritzten Sauerstoffs darstellt.

5. Verfahren nach einem der vorhergehenden Ansprüche, **dadurch gekennzeichnet, dass** das sauerstoffhaltige, an Sauerstoff arme Gas vorerwärmt wird, bevor es eingespritzt wird.

6. Verfahren nach einem der vorhergehenden Ansprüche, **dadurch gekennzeichnet, dass** das sauerstoffhaltige, an Sauerstoff reiche Gas wenigstens zum Teil aus einer Einheit zur Bevorratung flüssigen Sauerstoffs stammt.

7. Brenneranordnung mit getrennter Einspritzung, die von mindestens zwei Blöcken (1, 2, 14, 15, 16) gebildet ist und eine Öffnung zum Einspritzen von brennbarem Gas (3, 4) und wenigstens vier Öffnungen zum Einspritzen von sauerstoffhaltigem Gas (5, 6, 7, 8, 9, 10, 11, 12, 13) aufweist, wobei
- der erste Block (1, 2) eine Öffnung zum Einspritzen von Brennstoff (3, 4) und wenigstens zwei Öffnungen zum Einspritzen von sauerstoffhaltigem Gas (5, 6, 7, 8) aufweist, wobei die erste Öffnung zum Einspritzen von sauerstoffhaltigem Gas (5, 6) in Kontakt mit der Öffnung zum Einspritzen von Brennstoff (3, 4) angeordnet ist, wobei die zweite Öffnung zum Einspritzen von sauerstoffhaltigem Gas (7, 8) in einem Abstand l₁ zu der Öffnung zum Einspritzen von Brennstoff (3, 4) angeordnet ist,
- der zweite Block (14, 15) wenigstens eine dritte und eine vierte Öffnung zum Einspritzen von sauerstoffhaltigem Gas (9, 10, 11, 12) aufweist, die jede in einem Abstand l₂ zu der Öffnung zum Einspritzen von Brennstoff (3, 4) des ersten Blocks angeordnet sind, wobei l₂ größer ist als l₁, wobei die vierte Öffnung (11, 12) zum Einspritzen von sauerstoffhaltigem Gas eine Fläche aufweist, die zwischen dem 4- und 100-Fachen der Fläche der dritten Öffnung (9, 10) beträgt.

8. Brenneranordnung nach dem vorhergehenden Anspruch, **dadurch gekennzeichnet, dass** die erste Öffnung (5, 6) zum Einspritzen von sauerstoffhaltigem Gas mittig in der Öffnung zum Einspritzen von Brennstoff (3, 4) angeordnet ist.

9. Brenneranordnung nach Anspruch 7 oder 8, **dadurch gekennzeichnet, dass** sie einen dritten Block (16) aufweist, der eine fünfte Öffnung (13) zum Einspritzen von sauerstoffhaltigem Gas aufweist, die in einem Abstand l₂ zu der Öffnung zum Einspritzen von Brennstoff (3, 4) angeordnet ist und eine Fläche aufweist, die zwischen dem 4- und 100-Fachen der Fläche der dritten Öffnung (9, 10) zum Einspritzen beträgt.

10. Brenneranordnung nach dem vorhergehenden Anspruch, **dadurch gekennzeichnet, dass** sie zwei erste Blöcke (1, 2), zwei zweite Blöcke (14, 15) und einen dritten Block (16) umfasst.

11. Verwendung des Verfahrens nach einem der Ansprüche 1 bis 6 zum Erwärmen eines Glasgemenges oder für einen Wärmeofen.

12. Verwendung des Verfahrens nach einem der Ansprüche 1 bis 6 bei der Unterbrechung der kontinuierlichen Herstellung von Sauerstoff.

13. Verwendung des Verfahrens nach einem der Ansprüche 1 bis 6, bei der Unterbrechung der kontinuierlichen Zuführung von Sauerstoff.

## Claims

1. Method for the combustion of a fuel using an oxygenated gas, in which a jet of fuel and at least two jets of oxygen-rich oxygenated gas are injected, the first jet of oxygen-rich oxygenated gas, called the primary jet, being injected so as to be in contact with the jet of fuel and so as to generate a first incomplete combustion, the gases output by this first combustion still comprising at least part of the fuel, and the second jet of oxygen-rich oxygenated gas being injected at a distance l₁ from the jet of fuel so as to combust with a first part of the fuel present in the gases output by the first combustion, and in which an oxygen-lean oxygenated gas is injected at a distance l₂ from the jet of fuel so as to combust with a second part of the fuel present in the gases output by the first combustion, and in that l₂ is greater than l₁, and in which the oxygen-rich oxygenated gas has an oxygen concentration of more than 30 % by volume, **characterised in that** the oxygen-lean oxygenated gas has an oxygen concentration of at most 30 % by volume, and **in that** the surface area of the cross section of the injection orifice for the oxygen-lean oxygenated gas is between 4 and 100 times the surface area of an injection cross section for the oxygen-rich oxygenated gas that is also located at the distance l₂ from the jet of fuel.

2. Method according to claim 1, **characterised in that** the distance l₁ is of between 5 and 20 cm.

3. Method according to either of the preceding claims, **characterised in that** the distance l₂ is greater than 30 cm.

4. Method according to any of the preceding claims, **characterised in that** the amount of oxygen injected by the jets of oxygen-rich oxygenated gas represents from 10 % to 50 % of the total amount of oxygen injected.

5. Method according to any of the preceding claims, **characterised in that** the oxygen-lean oxygenated gas is preheated before being injected.

6. Method according to any of the preceding claims, **characterised in that** the oxygen-rich oxygenated gas comes at least in part from a liquid oxygen storage unit.

7. Separate injection burner assembly formed by at least two blocks (1, 2, 14, 15, 16) and comprising an orifice (3, 4) for injecting fuel gas and at least four orifices (5, 6, 7, 8, 9, 10, 11, 12, 13) for injecting oxygenated gas, wherein:
- the first block (1, 2) comprises a fuel injection orifice (3, 4) and at least two oxygenated-gas injection orifices (5, 6, 7, 8), the first oxygenated-gas injection orifice (5, 6) being arranged so as to be in contact with the fuel injection orifice (3, 4), the second oxygenated-gas injection orifice (7, 8) being arranged at a distance l₁ from the fuel injection orifice (3, 4);
- the second block (14, 15) comprises at least one third and one fourth oxygenated-gas injection orifice (9, 10, 11, 12), each arranged at a distance l₂ from the fuel injection orifice (3, 4) of the first block, l₂ being greater than l₁, the fourth oxygenated-gas injection orifice (11, 12) having a surface area of between 4 and 100 times the surface area of the third orifice (9, 10).

8. Burner assembly according to the preceding claim, **characterised in that** the first oxygenated-gas injection orifice (5, 6) is arranged centrally in the fuel injection orifice (3, 4).

9. Burner assembly according to either claim 7 or claim 8, **characterised in that** it comprises a third block (16) comprising a fifth oxygenated-gas injection orifice (13) arranged at a distance I₂ from the fuel injection orifice (3, 4) and having a surface area of between 4 and 100 times the surface area of the third injection orifice (9, 10).

10. Burner assembly according to the preceding claim, **characterised in that** it comprises two first blocks (1, 2), two second blocks (14, 15) and one third block (16).

11. Use of the method defined according to any of claims 1 to 6 for heating a glass filler or for a reheating furnace.

12. Use of the method defined according to any of claims 1 to 6 when the continuous production of oxygen is interrupted.

13. Use of the method according to any of claims 1 to 6 when the continuous supply of oxygen is interrupted.
